# EUROPEAN PATENT SPECIFICATION

(11) **EP 2 087 190 B1**
(45) Date of publication and mention of the grant of the patent: **26.03.2014**
(21) Application number: 07849755.9
(22) Date of filing: 14.11.2007
(51) Int. Cl.: E05B 65/08, F16B 35/04

(54) **HANDLE**
GRIFF
LEVIER

(30) Priority: 14.11.2006 IT RA20060068
(43) Date of publication of application: 12.08.2009
(73) Proprietor: Erreti S.R.L., 48010 Bagnara di Romagna (RA) (IT); Ferco International Ferrures et Serrures de Bâtiment, 57445 Réding (FR)
(72) Inventor: MONSCH, Pierre, 67700 Saverne (FR); GIESSINGER, Vincent, 57930 Mittersheim (FR); AVVANZINI, Ugo, 48010 Bagnara di Romagna (RA) (IT)
(74) Representative: Regnault de la Mothe, Hélène
(86) International application number: PCT/IT2007/000802
(87) International publication number: WO 2008/059549

(56) References cited:
- DE-C1- 19 731 407
- DE-U1-202006 007 514
- US-A- 5 582 442

## Description

The present invention relates to a handle. More in particular, the present invention relates to a handle for leaves, preferably sliding leaves. More in particular, the present invention relates to a handle for leaves, preferably sliding leaves, provided with a control member for controlling a locking device.

### BACKGROUND TO THE INVENTION

In the field of hardware for windows, doors and the like, with particular reference to sliding doors and leaves, the use of handles provided with a control member is well known, this control member being manually operatable and suitable to reversibly switch a chain or a locking device from and towards a closing operative position in which the sliding leaf is fixed with reference to the respective frame. Examples of these handles can be traced in patent literature as from the early 1960s, while some more recent embodiments are described in the documents US5092144, US2004/0079123 or US6945572 belonging to different United States manufacturers specialising in the field of hardware for windows, doors and the like. In use, the aforesaid solutions have proved to be effective, but all present the disadvantage of comprising a significant number of mechanical components, even of small dimensions, and are therefore characterized by considerable complexity in installing the handle, with consequent costs for the final user in terms of time and expense.

This problem is particularly marked in many European Countries, for instance in France, where leaves are usually provided with a couple pre-perforated support holes which present a mutual distance of only few centimetres. In this case, designer should provide very compact handles wherein a respective reduced central portion should house both the switching mechanism of the chain/locking device associated to the handle, and the anchoring members provided to couple the handle itself to the respective leaf in a rigid manner. An example of such a compact solution is disclosed in the US patent n.5582442 of the Truth Hardware Corp. which is relative to a latch assembly provided with a switching lever rotatably snap-coupled to a respective base and symmetrically displaced between two first seats for housing two respective anchoring members. Each anchoring member could present a respective head designed to be rigidly coupled to the base of the handle by means of a dowel housed in a respective second seat transverse to a respective first seat and accessible from the outside for performing assembling and maintenance operations. For instance, the anchoring members could be manufactured according to the teachings of the document DE202006007514.
A this point, is important to note that, in this kind of handle, the switching mechanism and the anchoring members are so close that they can interfere each other and, in particular, the switching lever could accidentally hit the opening of each second seat. As a consequence, the switching lever, which is usually manufactured in a plastic material, could be scratched or damaged while dust or plastic debris could fill the second seats hindering subsequent maintenance or customising operation.

Therefore, in view of the above description, the problem of producing a compact handle for sliding leaves which is provided with a rotatable switching member for controlling a respective locking device and anchoring members for rigidly coupled has not currently been solved in a satisfactory manner and it represents an interesting challenge for the applicant which has set for itself the objective of producing a compact handle where it is prevented any interference between the anchoring members and a respective switching lever.

### SUMMARY OF THE PRESENT INVENTION

The present invention relates to a handle. More in particular, the present invention relates to a handle for leaves, preferably sliding leaves. More in particular, the present invention relates to a handle for leaves, preferably sliding leaves, provided with a control member for controlling a locking device.

An object of the present invention is to construct a handle provided with a handgrip, a control member for controlling a respective locking device of the respective leaf, and an anchoring device, these elements being easily couplable to and decouplable from the handgrip for installation and/or maintenance requirements, so that the handle itself allows the disadvantages described above to be solved and is suitable to satisfy a plurality of requirements that to date have still not been addressed, and therefore, suitable to represent a new and original source of economic interest and capable of modifying the current market of handles.

According to the present invention, a handle is constructed, whose main characteristics are described in at least one of the appended claims.

### BRIEF DESCRIPTION OF THE DRAWINGS

Further characteristics and advantages of the handle according to the present invention defined by the appended claims, will be more apparent from the description below, set forth with reference to the accompanying drawings, which illustrate some non-limiting examples of embodiment, in which identical or corresponding parts of the device are identified by the same reference numbers. In particular:
- figure 1 is an exploded perspective view of a first preferred embodiment of a handle according to the present invention;
- figure 2 is a schematic perspective view of figure 1 rotated by 180° relative to the axis II of figure 1;
- figure 3 illustrates in enlarged scale a detail of figure 1 in a side elevation view and in a plan view;

- figure 4 is a cross sectional view of figure 1 with a median plan, in enlarged scale and with some parts removed for the sake of clarity;
- figure 5 illustrates a side portion of figure 1 in enlarged scale and with some parts removed for the sake of clarity;
- figure 6 is a perspective bottom view of a second preferred embodiment of figure 1;
- figure 7 is an exploded view of a lower central portion of figure 6; and

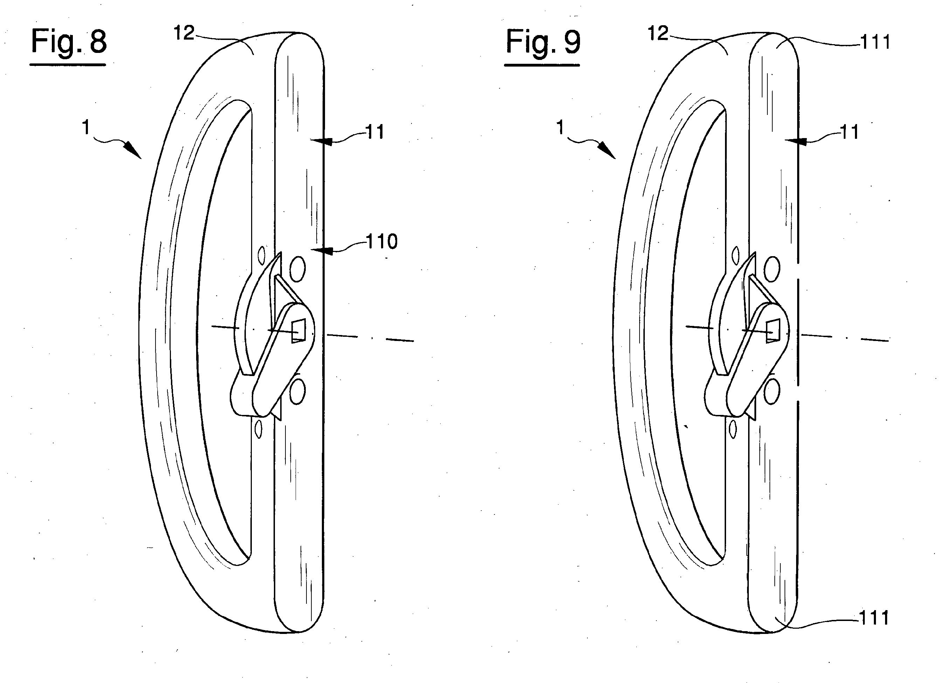

- figure 8 and 9 show two alternative shapes of a particular extracted from figure 6 with parts removed for the sake of clarity.

### DETAILED DESCRIPTION OF THE PRESENT INVENTION

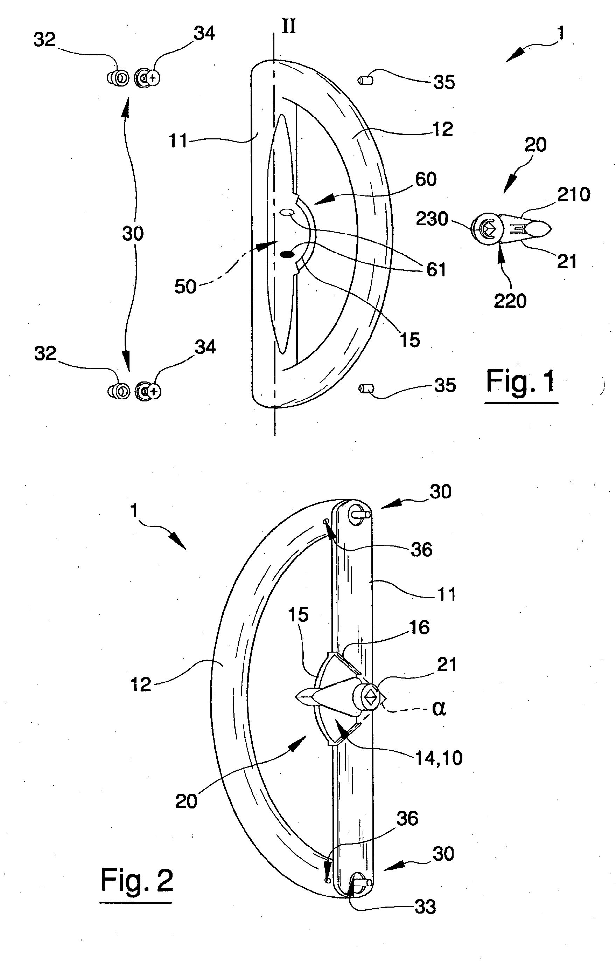

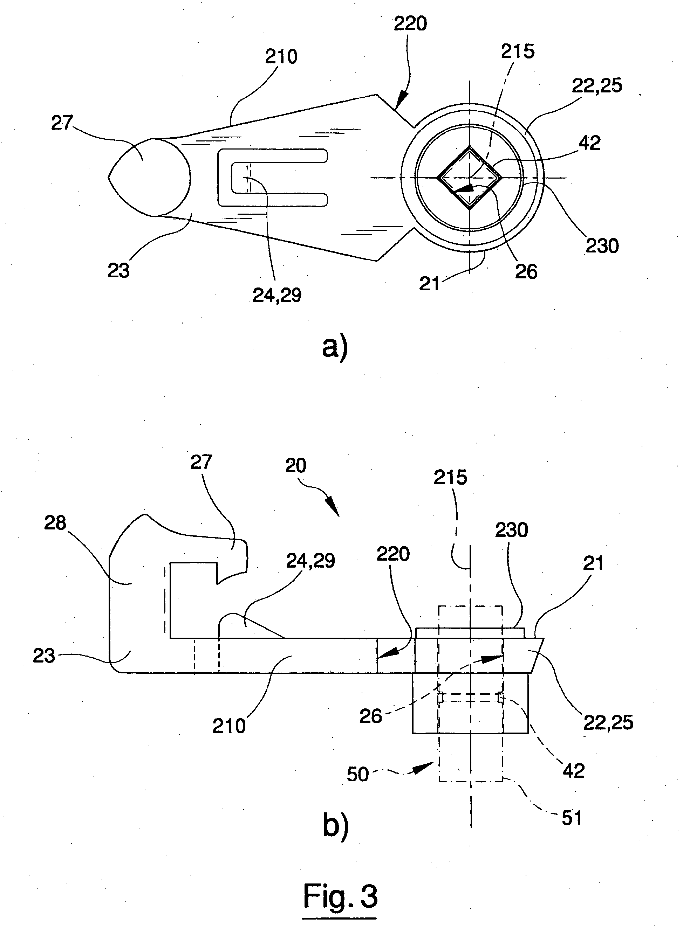

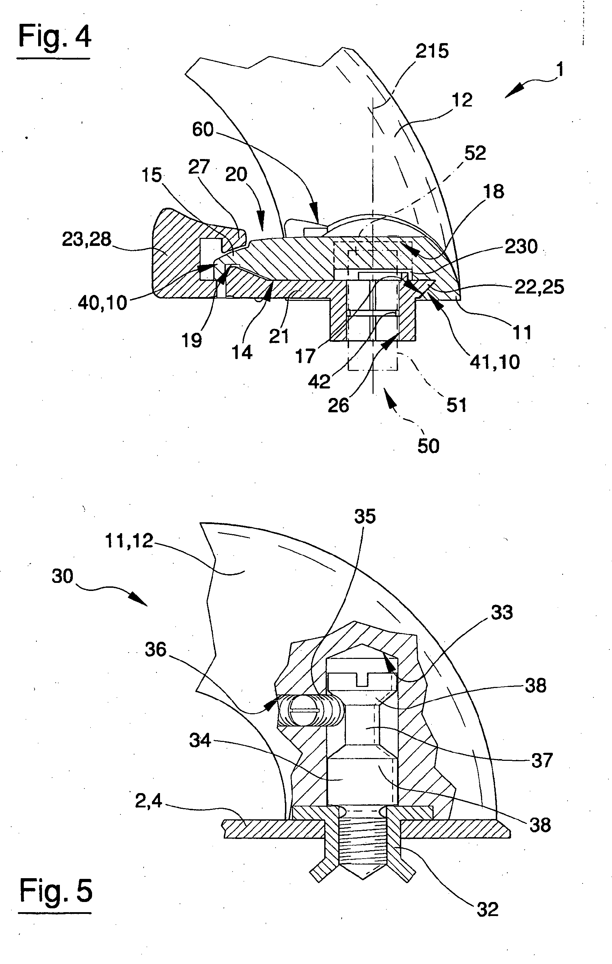

In figure 1, number 1 indicates in its entirety a handle for a leaf 2 which is coupled to a respective frame 3 in a given fashion, for instance in a rotatable or slidable manner; the leaf 2 can be associated for instance with a door, with a window or with a wardrobe without this limiting the present invention. With particular reference to figures 1 and 2, the handle 1 is provided with a base 11 suitable to integrally couple to a flat face 4 of the leaf 2 and presenting a handgrip 12 rigidly extending from the base 11. Again with reference to figures 1 and 2, the handgrip 12 can be, preferably but without limitation, arch-shaped and it can connect opposite ends of the base 11 to each other, in such a way as to give the handle 1 an annular shape and therefore be particularly sturdy. The handle 1 is provided with a control device 20, couplable to a respective locking device 50, known and therefore not shown, through which it is possible to connect selectively and in a substantially rigid manner the leaf 2 to the frame 3 by means of the coupling between at least one chain and one projection, both known and therefore not shown. In particular, the control device 20 is suitable to control the respective locking device 50 to switch this latter between a closing operative position and an opening operative position. Furthermore, the control device 20 comprises a switching member 21 that can be manually operated employing preferably, but without limitation, the same hand that engages the handgrip 12, without this necessarily requiring to release its grip on the handgrip 12. Furthermore, without in any way limiting the generality of the present invention, the switching member 21 can be produced by means of a lever 21 carried in a freely rotatable manner by the base 11 inside a respective first seat 14, and suitable to rotate about a pivot axis 215 between two given operative positions which, as will be more apparent from the description below, are respectively associated with the closing operative position and with the opening operative position of the locking device 50. With particular reference to figure 3, the lever 21 presents a second seat 26 positioned in proximity of a first end 25, represented on the right in figure 3, and suitable to house in a rigid and selectively releasable fashion a pin 51 at the pivot axis 215 to control, in use, a respective rotation coaxial with this axis. This pin 51 is associated with the locking device 50 and is suitable to control switching of an operative position of the locking device 50 by means of a given rotation thereof. In particular, the pin 51 presents preferably, but without limitation, a cross section thereof with a substantially square shape and is shape coupled to the lever 21 so that, in view of the above description, it is possible to actuate switching of the closing/opening operative position of the locking device 50 by means of a given rotation of the lever 21. The lever 21 also presents a second end 23, positioned at the opposite side to the first end 25 and to the pin 51, which extends outside the base 11 and is suitable to be manoeuvred by the user. With reference to figure 4, it should also be noted that the handle 1 is provided with a coupling device 10 suitable to maintain the lever 21 stably coupled to the respective first seat 14. In particular, the coupling device 10 is positioned between the base 11 and the lever 21 to retain the latter inside the respective first seat 14 in a stable and freely rotatable manner. This coupling device 10 comprises at least a bilateral elastic first coupling 40 between a first portion 28 associated with the second end 23 of the lever 21 and a second portion 15 of the base 11 delimiting the first seat 14 at the opposite side to the first end 23. In particular, the second portion 15 is shaped as a circular sector concentric with the pivot axis 215 and presents each radial section thereof substantially L-shaped. More in particular, the first portion 28 of the lever 21 is substantially C-shaped for substantially clamping the second portion 15 of the base 11, and presents an L-shaped first element 27 and a wedge-shaped second element 24 mutually opposite and positioned at opposite sides with respect to the second portion 15. Furthermore, the wedge-shaped element 24 is carried by an elastic plate 29 and is therefore suitable to become progressively elastically deformed under the action of the second portion 15 during each step of inserting the lever 21 in the first seat 14 according to a direction substantially perpendicular to the axis 215/to the pin 51. This characteristic of the second element 24 therefore allows the lever 21 to be substantially snap coupled to the base 11 and the bilateral first coupling 40 to be interpreted as an elastic snap first coupling 40.

The coupling device 10 can also comprise a second shape coupling 41 between the lever 21 and the base 11; this second coupling 41 is suitable to cooperate with the first coupling 40 to maintain the lever 21 stably coupled to the base 11. In particular, the second coupling 41 comprises a substantially wedge-shaped third element 22 carried by the lever 21 at the first end 25 thereof, and a third seat 17 obtained in the base 11 and shaped in a manner conjugated to the third element 22 for shape coupling thereof. This third seat 17 is concentric with the axis 215 to allow coaxial coupling between the lever 21 and the pin 51. In this regard, it should be noted that both the bilateral elastic first coupling 40 and the second shape coupling 41 are suitable to guide respective second and first ends 23 and 25 of the lever 21 along respective substantially circular and concentric trajectories, whose geometrical centres are located on the axis 215. Furthermore, without in any way limiting the generality of the present invention, the second portion 15 can present a groove 19 suitable to be shape coupled to the wedge-shaped second element 24, in such a way as to guide the latter along a further substantially circular trajectory whose geometrical centre lies also in this case on the axis 215. Therefore, in view of the above description, the coupling device 10, provided with at least an elastic snap first coupling 40, is suitable to couple the switching member/the lever 21 to the base 11 in a manner that is stable, selectively releasable and reassemblable at will in order to allow maintenance operations safeguarding, at the same time, the functionality of the coupling between the base 11 and the switching member/the lever 21. Furthermore, again in view of the above description, the coupling device 10 is suitable to maintain the switching device/the lever 21 stably coupled to the base 11 in a freely rotatable manner about the pivot axis 215 so that the switching member/the lever 21 can control a respective coaxial rotation of the pin 51.

In addition, with particular reference to figures 3 and 4, the lever 21 can present a circular collar 230 which is positioned at an opening of the second seat 26 on the side of the base 11 and is housed inside the base 11 in a respective substantially cylindrical fourth seat 18. The collar 230 presents an internal diameter exceeding any transverse dimension of the pin 51 and both the collar 230 and the respective cylindrical fourth seat 18 are coaxial with the axis 215. It should be noted that the presence of the collar 230 and of the respective fourth seat 18 is not strictly necessary for correct operation of the control device 20, as the coupling device 10 is sufficient to maintain the lever 21 stably coupled to the base 11 in a freely rotatable and axially fixed manner; on the other hand, the presence of a further rotating coupling between the collar 230 and the respective fourth seat 18 allows greater stability to be given to the coupling between the lever 21 and the base 11 and also allows the strains acting on the first and second couplings 40 and 41 to be reduced, so that they can benefit from a greater operating life. With particular reference to figure 4, it should also be noted that the cylindrical fourth seat 18 can present a depth even much greater than the height of the collar 230 in such a way as to house, with wide clearance, a possible third end 52 of the pin 51 extending beyond the second seat 26. In particular, the pin 51 is coupled to the respective second seat 26 in a stable and selectively releasable manner by the fact that the second seat 26 presents on the inside thereof a retaining device 42 for retaining the pin 51 which can comprise, by way of example and without in any way limiting the present invention, a security dowel, which transversely engages the pin 51 and locks it by friction against the lateral walls of the second seat 26, or elastic ribs positioned inside the second seat 26 in a substantially longitudinal manner to laterally engage the pin 51, or at least one elastic sealing ring positioned transversely to the pin 51 and suitable to engage a respective perimeter thereof to retain it stably inside the second seat 26.

With reference to figure 2, it should be noted that the first seat 14 is substantially shaped as a circular sector cut off on the side of the respective centre. This first seat 14 is concentric with the axis 215 and is radially delimited by two first sides 16, which delimit an angle α of given width, the vertex of which lies in an eccentric position with respect to the axis 215. In particular, the first seat 14 is shaped so that the first sides 16 are suitable to act as an abutment for respective second sides 210 of the lever 21. More in particular, with reference to figure 3, the second sides 210 present concave sections 220 positioned in proximity to the second seat 26 and shaped so as to give the lever 21 the possibility of rotating inside the first seat 14 by an angle of a width substantially identical to the angle a.

Furthermore, the handle 1 presents at least one signalling unit 60 for signalling the operative position of the locking device 50 so that each user can, observing the handle 1 with a simple glance, realise the effective current operative position of the respective leaf 2, and in particular whether the lever 21 is suitable to maintain the locking device 50 in the respective closing or opening position. This signalling unit 60 can, by way of example and without in any way limiting the present invention, be produced by at least one label 61 associated with a respective operative position of the lever 21 inside the first seat 14. More in particular, the handle 1 preferably presents a signalling device always referenced with the number 60 and comprising a pair of labels 61 visually distinguishable; these labels are associated with two different operative positions of the lever 21, which will in turn be associated with respective closing and opening operative positions of the locking device 50, and therefore positioned on the base 11 at opposite sides relative to the axis 215.

With particular reference to figure 5, the handle 1 is stably coupled to a flat face 4 of the leaf 2 by means of at least one pair of anchoring devices 30 positioned along the base 11 preferably, but without limitation, in a symmetrical manner with respect to the first seat 14 and therefore to the lever 21. In particular, each anchoring device 30 comprises a cap 32, axially perforated, shaped similarly to a rivet 32, and therefore indicated hereafter with this term. Each anchoring device 30 also comprises a body 34 preferably, but without limitation, presenting an intermediate third portion 37, bilaterally delimited by respective end fourth portions 38 and presenting with respect thereto a cross section of reduced dimensions. In view of the above description, each body 34 is substantially shaped similarly to an hourglass and presents a thread at the base of a respective fourth portion 38, represented at the bottom with reference to figure 5, to screw couple to a respective rivet 32, which is in turn rigidly connected to the respective flat face 4 and presents a central hole provided with a respective axial thread. Furthermore, each body 34 is stably housed inside a respective fifth seat 33 obtained in the base 11 so that it is not visible from the outside. If necessary this fifth seat 33, generally but without limitation obtained through a blind hole, can also extend inside the handgrip 12, should the distance between the fifth seats 33 require this. Coupling between each body 34 and the base 11 is stable and mechanically releasable; for instance, and without in any way limiting the present invention, this coupling can be secured by means of a security dowel 35 which is housed in a threaded hole 36 communicating with the fifth seat 33 to transversely engage the respective body 34 and constrain it rigidly inside the respective fifth seat 33. In particular, each security dowel 35, engaging the intermediate third portion 37 of a respective body 34, acts as a wedge to retain the respective body 34 in its seat exerting alternatively or in combination a transverse action on this intermediate third portion 37 or an axial action on the end fourth portions 38 of the body 34.

The use of the handle is easily understood from the description above and requires no further explanation; nonetheless, it may be advisable to specify some advantages deriving from the use of this handle. In particular, the handle 1 is predisposed to be coupled to any locking system 50 of the leaf 2 provided with a switching pin 51. In other words, the handle 1 is substantially universal and is suitable to be employed in combination with locking devices 50 manufactured by any operator in the sector of windows, doors and the like, even other than the applicant. Furthermore, the handle 1 is shaped so as to be coupled on both faces 4 of a leaf 2 and, in the case of the leaf 2 presenting a handle 1 on each of the flat faces 4 thereof, both handles 1 can control the same pin 51 by means of the respective switching members 21. Alternatively, only a first handle 1 can be coupled to the locking device 50, whilst the second handle 1 may also not be provided with any switching member 21 and therefore act only as a manoeuvring member. In this second case, the handle 1 can comprise a cap 250 which replaces the lever 21 and is suitable to seal the first seat 14 to prevent dust, rain or other external elements from penetrating the handle 1. This could be particularly useful especially in the case in which the second handle 1 is located on a flat face 4 facing an outside environment.

Furthermore, in view of the above description it is apparent that the presence of the coupling device 10, besides maintaining the lever 21 stably coupled to the respective first seat 14, makes it possible to ensure, especially during the installation phase, that the lever 21 does not accidentally slip out of the base 11, as could instead occur if the coupling between the lever 21 and the base 11 is only stable once the handle 1 is resting against the flat face 4 of the leaf 2. This could occur, for instance, in the case in which the lever 21 presents the pivot portion thereof, comprising the seat 26, substantially flat and therefore stably pivotable only after coupling to the pin 51. Furthermore, it should be specified that the presence of the coupling device 10 allows the handle 1 to be installed using only one hand, while the other hand can remain free to grip a tool or to perform any other operatin simultaneous to the installation of the handle 1.

Lastly, it is apparent that modifications and variants can be made to the handle 1 described and illustrated herein without however departing from the protective scope of the present invention.

However, some aspects of a process to be followed to facilitate assembly of the handle 1 should be specified. This process comprises a step of elastically snap coupling the lever 21 to the base 11 so that the lever 21 is freely rotatable and selectively decouplable. In particular, this step of elastically snap coupling the lever 21 to the base 11 comprises a step of inserting the lever 21 inside the base 11 according to a direction of insertion substantially perpendicular to the axis 215. More in particular, this step of inserting the lever 21 inside the base 11 in turn comprises a step of progressively deforming the second wedge-shaped element 24 of the lever 21 under the action of the second portion 15 of the base 11. Furthermore, and without in any way limiting the present method, the step of elastically snap coupling the lever 21 to the base 11 can be preceded by a step of separately painting the lever 21 and the assembly of the base 11 and of the handgrip 12 to obtain complete customisation of the aesthetic characteristics of the handle 1. This step of painting can preferably be implemented using the industrial powder painting technique and therefore comprise the sub-steps of coating the handle 1 with a given powder paint and the subsequent sub-step of baking the handle 1 at high temperature in a specific oven. Lastly, the present method comprises a step of giving stability to the coupling between the lever 21 and the base 11 by means of inserting a pin 51 inside the respective second seat 26; clearly this step can only be performed following the step of elastically snap coupling the lever 21 to the base 11.

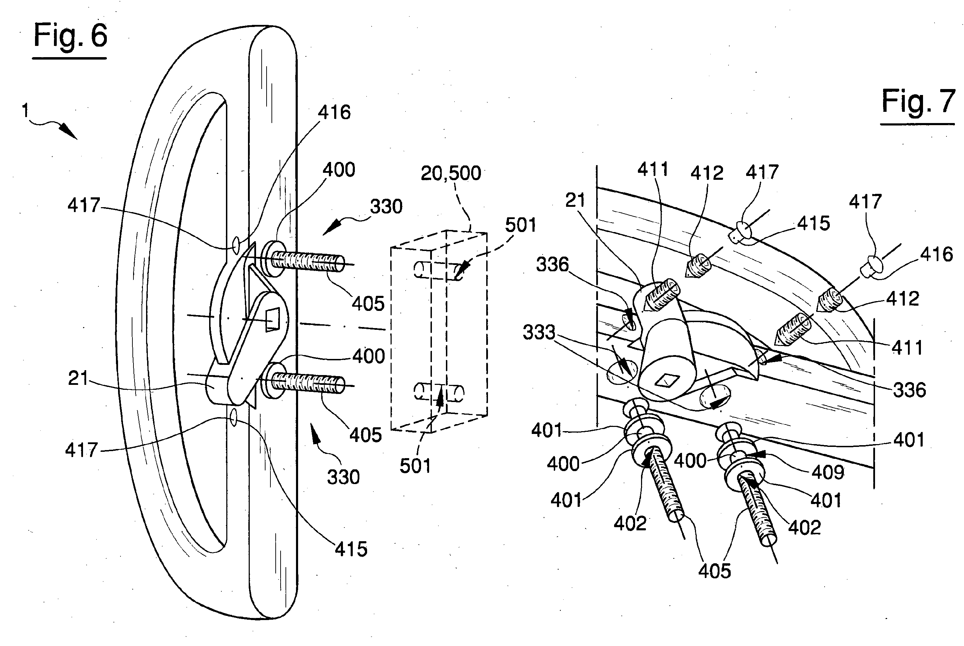

On the other hand, with particular reference to figures 6 and 7, it is possible to illustrate a variant of the handle 1, provided with a handgrip 12 substantially identical to the one described with reference to figures 1-4 and anchoring devices 330, which might become very useful when the installer has the need to match the handgrip 12 directly to a known and not described gear box 500 of the control means 20 of the hardware of the handle 1, mounted internally to the leaf 2, and visible only in figure 6 where it is illustrated by dashed lines. For the sake of simplicity, in this case, the known and not described gear box 500 has been depicted only in figure 6, where it is shaped as a box with two threaded holes 501 close to the its geometrical centre, and to the one of the handgrip 12, and distant one another at a length L. Therefore, the rivets 32 are not necessary at all. Still for the sake of simplicity, the parts and components of this version of handle 1 which remain the same of the version of figures 1-5 will be indicated by the same reference number.

With regard to length L is necessary to say that it is approximately 43 mm long, but it might be advantageously comprised within a range delimited by 1/7 and 2/5 the overall length of the base 11 or the handgrip 12 or it might approximately measure ¼ of the overall length of the handgrip 12 itself. As it is well known, 43 mm is the distance at which the housing holes for housing fasteners of the hardware for sliding leaves of windows, doors and the like are generally arranged, in order to allow installation of control devices/gear boxes 500 provided with rotatable members which need to cooperate with a pin similar to pin 51.

For the sake of practicality, the base 11 is provided with two holes 333 positioned symmetrically and at the opposite sides relative to the switching member 21, and thus to the respective first seat 14, such as the holes 33 visible in figure 2, but positioned at a close distance as above mentioned. In particular, in the handle 1 of figure 6 each anchoring device 330 comprises blind holes 333, predisposed to house, with clearance, bushes 400 which present externally a plurality of cylindrical projections 401 and an axial hole 402 for a screw 405 which is usable, as will be more apparent from the description below, for the mechanical coupling of the handle 1 to the threaded holes 501 of the gear box 500 carried by the leaf 2. An external diameter of each bush 400 approximates in defect the respective hole 333, and each bush 400 presents at least a pair of annular projections 401 delimiting two by two throats 409 positioned longitudinally adjacent. Each anchoring device 330 comprises, for each hole 333, a threaded blind hole 336, which is obtained in the base 11 in order to be engaged by at least an internal security dowel 411 which engages transversely the periphery of at least one of the two throats 409. In fact, each hole 336 presents longitudinal extension sufficient to be engaged by an external dowel 412, suitable to prevent the first dowel 411 from unscrewing. Furthermore, each hole 336 is accessible frontally from the second end 23 of the lever 21, and is inclined by an angle sufficient to allow easy use of a wrench for tightening the dowels 411 and 412, thus allowing an operator to prevent interferences with the external framework, known and therefore not shown, of the leaf 2 or with a glass sheet, known and therefore not shown, installed on the leaf 2. In particular, this given angle has preferably a width of 7°. Furthermore, the anchoring device comprises caps 415 and 416 which are substantially identical to one another and mushroom-shaped, in order to be housed, respectively, in the holes 336 and avoid access to the dowels 412. In particular, each cap 415 and 416 presents a substantially hemispherical head 417, suitable to act as an angular abutment for the lever 21. The caps 415 and 416 are made of plastic material of clashing colours: the cap 415 is made of red plastic material, and the cap 416 of green plastic material. In this way, each head 417 is suitable to provide information about an opening or closing operative position of the lever 21.

Therefore, the use of bushes 400 shaped as described above allows the respective screws 405 to be coupled rigidly to the base 11 with the respective longitudinal axis being positioned coaxially with the respective hole 333. It should be specified that the two holes 333 and 336 are substantially communicating. Therefore, installation of the screws 405 inside the axial hole 402 of the respective bush 400 and subsequent insertion of the assembly of these two components inside the respective hole 333 is followed by the use of a dowel 411 which couples tangentially and with a longitudinal axis substantially skew with respect to the screw 405 for determining locking of the bush 400 and, through interference exerted by the dowel 411 between the bush 400 and the screw 405, of the screw 405 with respect to the base 11. Closing the holes 336 by means of the red cap 415 and the green cap 416 allows to provide abutments for the second end 23 of the lever 21, in addition to indicate naturally the opening or closing condition of the handle 1 itself.

Proceeding in this way, it is apparent that it is possible to provide the handle 1 with screws available in the market, with clear saving with respect to the use of special screws such as the hourglass-shaped bodies 34.

In case the handle 1 had a base 11 shaped with a concavity 110 faced to the flat face 4 of the leaf 2, or in case the base 11 showed projections 111 at its extremities, the action of the two anchoring device 330 would tend to bend elastically at least the central portion base 11. In this case, the screws 405 would be longitudinally stressed by the base 11 which would prevent screws 405 from being unscrewed, and allow the handgrip 12 to maintain a good fastening with the leaf 2.

In view of the above description, it is apparent that the handle 1 and the respective assembly method allow the technical problem in question to be solved, namely they allow the production of a handle, provided with a control member for controlling the opening and closing mechanism and with an anchoring device, which are easily assemblable and decouplable on the base of the installation or maintenance requirements, without this in any way jeopardising the handgrip 12 and/or leaving traces on it, and thus without damaging the components of the handle 1. Therefore, the handle 1, in both the versions described herein, can be completely customised using common industrial painting techniques, for instance powder painting, without needing to perform subsequent operations prior to assembly of the lever 21, and therefore without jeopardising correct operation of the control device 20 associated with the handle 1 and of the respective anchoring devices 30 or 330.

To conclude, it is important to stress that each anchoring device 30 or 330 allows to accomplish a good coupling of the handle 1 to the flat face 4 of the leaf 2 and to combine anti-rotation capability and easy and correct positioning.

## Claims

1. A handle (1) for a leaf (2) coupled to a frame (3) in a slidable or rotatable manner and provided with a locking device (50) thereof suitable to selectively connect in a substantially rigid manner said leaf (2) to said frame (3); said handle (1) comprising a base (11) integrally couplable to a flat face (4) of said leaf (2) by means of respective anchoring means (30) (330); a handgrip (12) rigidly extending from said respective base (11), control means (20) (500) carried by said base (11) and provided with at least one rotatable switching member (21) interfaceable with said locking device (50) to switch selectively said locking device (50) between respective closing and opening operative positions; said anchoring means (30) (330) comprising at least a first seat (33) (333) obtained in said base (11) and arranged to house a coupling member (34) (405); a hole (36) (336) for each said coupling member (34) (405) which communicate with a respective said first seat (33) (333) and is obtained in said base (11) along a direction substantially transverse to the respective said first seat (33) (333); **characterised in that** at least one contrast member (35) (411, 412) for each said coupling member (34) (405) is housed in a respective said hole (36) (336) to engage the respective said coupling member (34) (405) and couple it to said base (11) in a substantially rigid manner; said anchoring means (30) (330) comprise at least a mushroom-shaped member (415, 416) housed in a respective said hole (36) (336) and suitable, in use, both to avoid access to any respective contrast member (35) (411, 412) and to act as an angular abutment (415,416) for said switching member (21) in order to limit the rotation thereof relative to said base (11).

2. A handle according to claim 1, **characterised in that** said anchoring means (330) comprise at least a bush (400) housed in a said first seat (333) and coaxially engaged by a said coupling member (405); said coupling member (405) being threaded and coupled in a substantially rigid manner to said base (11) by means of a said contrast member (411, 412) comprising a dowel (411, 412) carried transversely by said base (11).

3. A handle according to claim 1 or 2, **characterised by** comprising said control means (500) comprising a gear box (500) provided of two threaded holes (501) close distant one another at a determined length (L) round the geometrical centre of said base (11); each said first seat (333) being predisposed to house a coupling member (405) by means of a bush (400) which present externally at least a cylindrical projections (401).

4. A handle according to claim 3, **characterised in that** each coupling member (405) comprises a screw (405) and that said determined length (L) is approximately 43 mm long.

5. A handle according to claim 3, **characterised in that** each coupling member (405) comprises a screw (405) and that said determined length (L) is comprised within a range delimited by 1/7 and 2/5 the overall length of the said handgrip (12) itself.

6. A handle according to claim 4, **characterised in that** each coupling member (405) comprises a screw (405) and that said determined length (L) approximately measure ¼ of the overall length of the said handgrip (12) itself.

7. A handle according to any one of claims 3-6, **characterised in that** said base (11) is shaped with a concavity (110) faceable to the said flat face (4) of the said leaf (2), so that al least a said screw (405) is in use longitudinally stressed by the said base (11) and is prevented from being unscrewed, and allow the said handgrip (12) to maintain a good fastening with the said leaf (2).

8. A handle according to any one of claims 3-6, **characterised in that** said base (11) shows projections (111) at its extremities, so that al least a said screw (405) is in use longitudinally stressed by the said base (11) and is prevented from being unscrewed, and allow the said handgrip (12) to maintain a good fastening with the said leaf (2).

9. A handle according to any one of the preceding claims, **characterised by** presenting signalling means (60) associated with said base (11) to indicate visually a current operative condition of said locking device (50).

10. A handle according to claim 9, **characterised in that** said signalling means (60) comprise each said mushroom-shaped member (415) (416); each said mushroom-shaped member (415) (416) comprising a cap (415) (416) provided with a head (417) of given colour in order to provide information about an opening or closing operative condition of said switching member (21).

11. A handle according to any one of preceding claims, **characterised in that** each said coupling member (34) is substantially shaped similarly to an hourglass (34) and is coupled in a substantially rigid manner to said base (11) by means of a said contrast member (35) consisting of a security dowel (35) carried transversely by said base (11).

12. A handle according to claim 11, **characterised in that** each said coupling member (34) presents an intermediate third portion (37) bilaterally delimited by respective end fourth portions (38) and presenting with respect thereto a cross section of reduced dimensions; each said security dowel (35) engaging said respective coupling member (34) to exert alternatively or in combination a transverse action on said intermediate third portion (37) or an axial action on said end fourth portions (38).

13. A handle according to any one of preceding claims, **characterised in that** said switching member (21) is coupled to said base (11) in a manner that is stable, selectively releasable and reassemblable at will, in order to allow maintenance operations safeguarding the functionality of the coupling between said base (11) and said switching member (21), and so that said base (11) and said switching member (21) can be subjected separately to technological treatments suitable to modify respective aesthetic and/or functional characteristics thereof.

14. A handle according to claim 13, **characterised in that** said switching member (21) comprises a lever (21) coupled in a selectively releasable and freely rotatable manner to said base (11) in a respective second seat (14), and is provided with a third seat (26) for a pin (51) associated to said locking device (50), so as to control, in use, a respective rotation thereof.

15. A handle according to claim 14, **characterised by** comprising coupling means (10) positioned between said lever (21) and said base (11) to maintain said lever (21) coupled to said first seat (14) in a freely rotatable manner with respect to a pivot axis (215) substantially coaxial with said pin (51); said coupling means (10) comprising at least a bilateral elastic first coupling (40) between said lever (21) and said base (11).

16. A handle according to claim 15, **characterised in that** said first coupling (40) comprises a manoeuvring first end (23) for operating said lever (21) positioned on the opposite side to said third seat (26) to be accessible to a user; said first end comprising a substantially C-shaped first portion (28) for substantially clamping said base (11).

17. A handle according to claim 16, **characterised in that** said base (11) presents a substantially circular second portion (15), concentric with said pivot axis (215) and presenting each radial section thereof substantially L-shaped; said first portion (28) comprising an L-shaped first element (27) and a wedge-shaped second element (24) placed opposite to each other and positioned at opposite sides with respect to said second portion (15).

18. A handle according to claim 17, **characterised in that** said wedge-shaped second element (24) is carried by an elastic plate (29) in such a way as to allow snap coupling of said lever (21) to said base (11).

19. A handle according to any one of claims 15-18, **characterised in that** said coupling means (10) comprise a second coupling (41), substantially circumferentially shaped with respect to said pivot axis (215); said second coupling (41) being provided with a wedge-shaped third element (22) carried by said lever (21) at the opposite side to said first end (23) and in correspondence of a second end (25) thereof, and with a conjugate fourth seat (17) obtained in said base (11).

## Patentansprüche

1. Ein Griff (1) für einen Türflügel (2), der in einer verschiebbaren oder drehbare Weise an einem Rahmen (3) befestigt ist und mit einer Schließvorrichtung (50) versehen ist und daher geeignet ist, selektiv den Türflügel (2) in einer im Wesentlichen starren Weise mit dem Rahmen (3) zu verbinden; der Griff (1) umfasst eine Basis (11) integral verbindbar mit einer flachen Front (4) des Türflügels (2) durch entsprechende Verankerungsmittel (30) (330); ein Handgriff (12) starr hervorstehend von der entsprechenden Basis (11), Kontrollmittel (20) (500), die getragen werden von der Basis (11) und versehen sind mit zumindest einem drehbaren Schaltelement (21), welches koppelbar mit der Schließvorrichtung (50) ist, um die Schließvorrichtung (50) selektiv zwischen entsprechenden schließenden und öffnenden Arbeitsposition umzuschalten; die Ankermittel (30) (330) umfassen zumindest einen ersten Sitz (33) (333), der in der Basis (11) gehalten ist und angeordnet ist, um ein Kopplungselement (34) (405) aufzunehmen; ein Loch (36) (336) für jedes der Kopplungsmittel (34) (405), welches kommuniziert mit einem entsprechenden ersten Sitz (33) (333) und gehalten ist in der Basis (11) entlang einer Richtung, die im Wesentlichen quer zum entsprechenden ersten Sitz (33) (333) ist; **dadurch gekennzeichnet, dass** zumindest ein Kontrastelement (35) (411, 412) für jedes Kopplungselement (34) (405) in einem entsprechenden Loch (36) (336) aufgenommen ist, um das entsprechende Kopplungselement (34) (405) zu erfassen und es mit der Basis (11) in einer im Wesentlichen starren Weise zu verbinden; die Verankerungsmittel (30) (330) umfassen zumindest ein pilzförmiges Element (415, 416), welches aufgenommen ist in einem der entsprechenden Löcher (36) (336) und geeignet ist, während der Verwendung sowohl den Zugang zu jedem der entsprechenden Kontrastelemente (35) (411, 412) zu verhindern als auch als ein winkeliges Anschlagelement (415, 416) für das Schaltelement (21) zu wirken, um dessen Rotation relativ zur Basis (11) zu begrenzen.

2. Ein Griff nach Anspruch 1, **dadurch gekennzeichnet, dass** die Verankerungsmittel (330) zumindest eine Buchse (400) umfassen, die in dem ersten Sitz (333) aufgenommen ist und koaxial erfasst ist durch das Kopplungselement (405); das Kopplungselement (405) ist eingeschraubt und verbunden mit der Basis (11) in einer im Wesentlichen starren Weise anhand des Kontrastelements (411, 412), welches einen Stift (411, 412) umfasst, der anhand die Basis (11) quer gehalten ist.

3. Ein Griff nach Anspruch 1 oder 2, **gekennzeichnet durch** das Umfassen der Kontrollmittel (500) umfassend eine Getriebebox (500), die versehen ist mit zwei Gewindelöchern (501), die mit genauem Abstand von vorgegebener Länge (L) zueinander um das geometrische Zentrum der Basis (11) gehalten sind; jeder der ersten Sitze (333) ist prädisponiert um ein Kopplungselement (405) anhand einer Buchse (400) aufzunehmen, die extern zumindest eine zylindrische Projektion (401) ausbildet.

4. Ein Griff nach Anspruch 3, **dadurch gekennzeichnet, dass** jedes Kopplungselement (405) eine Schraube (405) umfasst und dass die vorgegebene Länge (L) in etwa 43 mm lang ist.

5. Ein Griff nach Anspruch 3, **dadurch gekennzeichnet, dass** jedes Kopplungselement (405) eine Schraube (405) umfasst und dass die vorgegebene Länge (L) sich im Bereich zwischen 1/7 und 2/5 der Gesamtlänge des Handgriffs (12) selbst beträgt.

6. Ein Griff nach Anspruch 4, **dadurch gekennzeichnet, dass** jedes Kopplungselement (405) eine Schraube (405) umfasst und dass die entsprechende Länge (L) in etwa ¼ der Gesamtlänge des Handgriffs (12) selbst beträgt.

7. Ein Griff nach einem der Ansprüche 3 - 6, **dadurch gekennzeichnet, dass** die Basis (11) mit einer Konkavität (110) geformt ist, die der flachen Front (4) des Türflügels (2) zugewandt ist, so dass zumindest eine der Schrauben (405) währender der Verwendung longitudinal beansprucht wird durch die Basis (11) und gesichert wird vor einem Herausdrehen, und dass dem Handgriff (12) eine gute Befestigung mit dem Türflügel (2) ermöglicht wird.

8. Ein Griff nach einem der Ansprüche 3 - 6, **dadurch gekennzeichnet, dass** die Basis (11) an ihren Endpunkten Vorsprünge (111) ausbildet ,so dass zumindest eine der Schrauben (405) während der Verwendung durch die Basis (11) beansprucht und vor einem Herausdrehen gesichert wird, und dass dem Handgriff (12) eine gute Befestigung mit dem Türflügel (2) ermöglicht wird.

9. Ein Griff nach einem der vorhergehenden Ansprüche, **gekennzeichnet durch** das Anzeigen von Signalisierungsmitteln (60), die mit der Basis (11) verknüpft sind, um visuell einen derzeitigen Arbeitszustand der Schließvorrichtung (50) anzuzeigen.

10. Ein Griff nach Anspruch 9, **dadurch gekennzeichnet, dass** die Signalisierungsmittel (60) jeweils ein pilzförmiges Element (415) (416) umfassen; jedes der pilzförmigen Elemente (415) (416) umfasst eine Kappe (415) (416), die mit einem Kopf (417) von vorgegebener Farbe versehen ist, um Informationen über einen schließenden und öffnenden Arbeitszustand des Schaltelements (21) bereitzustellen.

11. Ein Griff nach einem der vorhergehenden Ansprüche, **dadurch gekennzeichnet, dass** jedes der Kopplungselemente (34) im Wesentlichen gleichartig geformt ist wie ein Stundenglas (34) und in einer im Wesentlichen starren Weise mit der Basis (11) verbunden ist anhand des Kontrastelements (35),welches besteht aus einem Sicherungsstift (35), der durch die Basis (11) quer gehalten wird.

12. Ein Griff nach Anspruch 11, **dadurch gekennzeichnet, dass** jedes Kopplungselement (34) einen dritten Zwischenabschnitt (37) ausbildet, beidseitig begrenzt durch entsprechende vierte Endabschnitte (38) und welche diesbezüglich einen Querschnitt ausbilden mit verringerten Dimensionen; jede der Sicherungsstifte (35) erfasst das entsprechende Kopplungselement (34) um, alternativ oder in Kombination, eine transversale Aktion auf den Zwischenabschnitt (37) oder eine axiale Aktion auf die vierte Endabschnitte (38) auszuüben.

13. Ein Griff nach einem der vorherigen Ansprüche, dass das Schaltelement (21) verbunden ist mit der Basis (11) in einer Weise, die stabil, selektiv lösbar und wiederverbindbar nach Belieben ist, um Wartungsarbeiten zur Sicherstellung der Funktionalität der Verbindung zwischen der Basis (11) und des Schaltelements (21) zu ermöglichen, und so dass die Basis (11) und das Schaltelement (21) separat ausgesetzt werden können für technologische Maßnahmen, die geeignet sind, deren entsprechende ästhetische und/oder funktionale Charakteristik zu verändern.

14. Ein Griff nach Anspruch 13, **dadurch gekennzeichnet, dass** das Schaltelement (21) einen Hebel (21) umfasst, der mit der Basis (11) verbunden ist in einer selektiv lösbaren und frei rotierbaren Weise in einem entsprechenden zweiten Sitz (14), und der versehen ist mit einem dritten Sitz (26) für einen Pin (51), der verknüpft ist mit der Schließvorrichtung (50), um während der Verwendung eine entsprechende Rotation davon zu kontrollieren.

15. Ein Griff nach Anspruch 14, **gekennzeichnet durch** das Umfassen von Kopplungsmitteln (10), die angeordnet sind zwischen dem Hebel (21) und der Basis (11), um den Hebel (21) mit dem ersten Sitz (14) verbunden zu halten in einer frei rotierbaren Weise bezüglich einer Drehachse (215), die im Wesentlichen koaxial ist zu dem Pin (51); die Kopplungsmittel (10) umfassen zumindest eine beidseitig elastische Kopplung (40) zwischen dem Hebel (21) und der Basis (11).

16. Ein Griff nach Anspruch 15, **dadurch gekennzeichnet, dass** die erste Kopplung (40) ein erstes Manövrierende (23) zum Bedienen des Hebels(21) umfasst, angeordnet an der dem dritten Sitz (26) gegenüberliegenden Seite, um für einen Nutzer zugänglich zu sein; das erste Ende umfasst einen im Wesentlichen C-förmigen ersten Abschnitt (28) zum weitgehenden Einklemmen der Basis (11).

17. Ein Griff nach Anspruch 16, **dadurch gekennzeichnet, dass** die Basis (11) einen im Wesentlichen kreisförmigen zweiten Abschnitt (15) ausbildet, der konzentrisch zur Drehachse (215) ist und jeweils einen radialen Abschnitt in im Wesentlichen L-förmiger Gestalt ausbildet; der erste Abschnitt (28) umfasst ein L-förmiges erstes Element (27) und einen keilförmiges zweites Element (24), die einander gegenüber platziert sind und bezüglich des zweiten Abschnitts (15) an gegenüberliegenden Seiten angeordnet sind.

18. Ein Griff nach Anspruch 17, **dadurch gekennzeichnet, dass** das keilförmige zweite Element (24) derart durch eine elastische Platte (29) getragen wird, dass eine Schnappverbindung des Hebels (219) mit der Basis (11) ermöglicht wird.

19. Ein Griff nach einem der Ansprüche 15 - 18, **dadurch gekennzeichnet, dass** die Kopplungsmittel (10) eine zweite Kopplung (41) umfassen, im Wesentlichen umlaufend gestaltet bezüglich der Drehachse (215); die zweite Kopplung (41) ist versehen mit einem keilförmigen dritten Element (22), das gehalten wird durch den Hebel (21) an der gegenüberliegenden Seite zum ersten Ende (23) und in Übereinstimmung mit einem zweiten Ende (25) davon, und mit einem konjugierten vierten Sitz (17), der in der Basis (11) gehalten ist.

## Revendications

1. Poignée (1) pour un vantail (2) couplé à un dormant (3) de manière coulissante ou rotative et comportant un dispositif de verrouillage (50) de celui-ci approprié pour relier sélectivement, d'une manière sensiblement rigide, ledit vantail (2) audit dormant (3) ; ladite poignée (1) comprenant une base (11) apte à être couplée d'un seul tenant à une face plate (4) dudit vantail (2) par des moyens d'ancrage respectifs (30) (330) ; une partie poignée (12) s'étendant de manière rigide à partir de ladite base respective (11), des moyens de commande (20) (500) portés par ladite base (11) et comportant au moins un élément de commutation rotatif (21) interfaçable avec ledit dispositif de verrouillage (50) pour commuter sélectivement ledit dispositif de verrouillage (50) entre des positions fonctionnelles de fermeture et d'ouverture respectives ; lesdits moyens d'ancrage (30) (330) comprenant au moins un premier siège (33) (333) obtenu dans ladite base (11) et agencé pour recevoir un élément d'accouplement (34) (405) ; un trou (36) (336) pour chaque élément d'accouplement précité (34) (405), lequel communique avec un premier siège respectif précité (33) (333) et est obtenu dans ladite base (11) selon une direction sensiblement transversale audit premier siège respectif (33) (333) ; **caractérisée par le fait qu'**au moins un élément de contraste (35) (411, 412) pour chaque élément d'accouplement précité (34) (405) est reçu dans un trou respectif précité (36) (336) pour engager ledit élément d'accouplement respectif précité (34) (405) et l'accoupler à ladite base (11) d'une manière sensiblement rigide ; lesdits moyens d'ancrage (30) (330) comprennent au moins un élément en forme de champignon (415, 416) reçu dans un trou respectif précité (36) (336) et approprié, en utilisation, à la fois pour empêcher un accès à tout élément de contraste respectif (35) (411, 412) et pour servir de butée angulaire (415, 416) pour ledit élément de commutation (21) afin de limiter la rotation de celui-ci par rapport à ladite base (11).

2. Poignée selon la revendication 1, **caractérisée par le fait que** lesdits moyens d'ancrage (330) comprennent au moins une douille (400) reçue dans un premier siège précité (333) et engagée coaxialement par un élément d'accouplement précité (405) ; ledit élément d'accouplement (405) étant fileté et couplé d'une manière sensiblement rigide à ladite base (11) au moyen d'un élément de contraste précité (411, 412) comprenant un goujon (411, 412) porté transversalement par ladite base (11).

3. Poignée selon l'une des revendications 1 ou 2, **caractérisée par le fait que** lesdits moyens de commande (500) comprennent une boîte d'engrenages (500) comportant deux trous taraudés (501) proches distants l'un de l'autre d'une longueur déterminée (L) autour du centre géométrique de ladite base (11) ; chaque premier siège précité (333) étant prédisposé pour recevoir un élément d'accouplement (405) au moyen d'une douille (400) qui présente extérieurement au moins une saillie cylindrique (401).

4. Poignée selon la revendication 3, **caractérisée par le fait que** chaque élément d'accouplement (405) comprend une vis (405) et que ladite longueur déterminée (L) est d'approximativement 43 mm de long.

5. Poignée selon la revendication 3, **caractérisée par le fait que** chaque élément d'accouplement (405) comprend une vis (405) et que ladite longueur déterminée (L) est comprise dans une plage délimitée par 1/7 et 2/5 de la longueur globale de ladite partie poignée (12) elle-même.

6. Poignée selon la revendication 4, **caractérisée par le fait que** chaque élément d'accouplement (405) comprend une vis (405) et que ladite longueur déterminée (L) mesure approximativement ¼ de la longueur globale de ladite partie poignée (12) elle-même.

7. Poignée selon l'une quelconque des revendications 3 à 6, **caractérisée par le fait que** ladite base (11) est façonnée avec une concavité (110) apte à être tournée vers ladite face plate (4) dudit vantail (2), de telle sorte qu'au moins une vis précitée (405) est, en utilisation, longitudinalement contrainte par ladite base (11) et est empêchée de se dévisser, et permet à ladite partie poignée (12) de maintenir une bonne fixation avec ledit vantail (2).

8. Poignée selon l'une quelconque des revendications 3 à 6, **caractérisée par le fait que** ladite base (11) présente des saillies (111) à ses extrémités, de telle sorte qu'au moins une vis précitée (405) est, en utilisation, longitudinalement contrainte par ladite base (11) et est empêchée de se dévisser, et permet à ladite partie poignée (12) de maintenir une bonne fixation avec ledit vantail (2).

9. Poignée selon l'une quelconque des revendications précédentes, **caractérisée par le fait qu'**elle présente des moyens de signalisation (60) associés à ladite base (11) pour indiquer visuellement un état de fonctionnement courant dudit dispositif de verrouillage (50).

10. Poignée selon la revendication 9, **caractérisée par le fait que** lesdits moyens de signalisation (60) comprennent ledit élément en forme de champignon (415) (416) ; chaque élément en forme de champignon précité (415) (416) comprenant un capuchon (415) (416) comportant une tête (417) d'une couleur donnée afin de fournir des informations concernant un état fonctionnel d'ouverture ou de fermeture dudit élément de commutation (21).

11. Poignée selon l'une quelconque des revendications précédentes, **caractérisée par le fait que** ledit élément d'accouplement (34) a une forme sensiblement analogue à un sablier (34) et est couplé d'une manière sensiblement rigide à ladite base (11) au moyen d'un élément de contraste précité (35) consistant en un goujon de sécurité (35) porté transversalement par ladite base (11).

12. Poignée selon la revendication 11, **caractérisée par le fait que** ledit élément d'accouplement (34) présente une troisième partie intermédiaire (37) délimitée de façon bilatérale par des quatrièmes parties d'extrémité respectives (38) et présentant par rapport à celles-ci une section transversale de dimensions réduites ; chaque goujon de sécurité précité (35) engageant ledit élément d'accouplement respectif (34) pour exercer de manière alternée ou en combinaison une action transversale sur ladite troisième partie intermédiaire (37) ou une action axiale sur lesdites quatrièmes parties d'extrémité (38).

13. Poignée selon l'une quelconque des revendications précédentes, **caractérisée par le fait que** ledit élément de commutation (21) est couplé à ladite base (11) de telle sorte qu'il est stable, apte à être sélectivement libéré et réassemblé à volonté, afin d'autoriser des opérations de maintenance protégeant la fonctionnalité de l'accouplement entre ladite base (11) et ledit élément de commutation (21), et de telle sorte que ladite base (11) et ledit élément de commutation (21) peuvent être soumis séparément à des traitements technologiques appropriés pour modifier des caractéristiques esthétiques et/ou fonctionnelles respectives de ceux-ci.

14. Poignée selon la revendication 13, **caractérisée par le fait que** ledit élément de commutation (21) comprend un levier (21) couplé d'une manière sélectivement libérable et librement rotative à ladite base (11) dans un deuxième siège respectif (14) et comporte un troisième siège (26) pour une goupille (51) associée audit dispositif de verrouillage (50), de façon à commander, en utilisation, une rotation respective de celui-ci.

15. Poignée selon la revendication 14, **caractérisée par le fait qu'**elle comprend des moyens d'accouplement (10) positionnés entre ledit levier (21) et ladite base (11) pour maintenir ledit levier (21) couplé audit premier siège (14) d'une manière librement rotative par rapport à un axe de pivotement (215) sensiblement coaxial à ladite goupille (51) ; lesdits moyens d'accouplement (10) comprenant au moins un premier accouplement élastique bilatéral (40) entre ledit levier (21) et ladite base (11).

16. Poignée selon la revendication 15, **caractérisée par le fait que** ledit premier accouplement (40) comprend une première extrémité de manoeuvre (23) pour actionner ledit levier (21) positionnée sur le côté opposé audit troisième siège (26) pour être accessible à un utilisateur ; ladite première extrémité comprenant une première partie sensiblement en forme de C (28) pour sensiblement serrer ladite base (11).

17. Poignée selon la revendication 16, **caractérisée par le fait que** ladite base (11) présente une seconde partie sensiblement circulaire (15), concentrique audit axe de pivotement (215) et présentant chaque section radiale de celle-ci sensiblement en forme de L ; ladite première partie (28) comprenant un premier élément en forme de L (27) et un deuxième élément en forme de coin (24) placés l'un à l'opposé de l'autre et positionnés sur des côtés opposés par rapport à ladite seconde partie (15).

18. Poignée selon la revendication 17, **caractérisée par le fait que** ledit deuxième élément en forme de coin (24) est porté par une plaque élastique (29) de telle manière à permettre un accouplement rapide dudit levier (21) à ladite base (11).

19. Poignée selon l'une quelconque des revendications 15 à 18, **caractérisée par le fait que** lesdits moyens d'accouplement (10) comprennent un second accouplement (41), de forme sensiblement circonférentielle par rapport audit axe de pivotement (215) ; ledit second accouplement (41) comportant un troisième élément en forme de coin (22) porté par ledit levier (21) sur le côté opposé à ladite première extrémité (23) et en correspondance avec une seconde extrémité (25) de celui-ci, et un quatrième siège conjugué (17) obtenu dans ladite base (11).
